# EUROPÄISCHE PATENTSCHRIFT

(11) **EP 0 624 330 B1**
(45) Veröffentlichungstag und Bekanntmachung des Hinweises auf die Patenterteilung: **29.01.1997**
(21) Anmeldenummer: 94105589.9
(22) Anmeldetag: 12.04.1994
(51) Int. Cl.: A47C 4/03, F16B 12/44

(54) **Kreuzzarge aus Holz für Sitzmöbel und Tische**
Wooden frame for chairs and tables
Cadre en bois pour chaises et tables

(30) Priorität: 13.05.1993 DE 4315805
(43) Veröffentlichungstag der Anmeldung: 17.11.1994
(73) Patentinhaber: Kusch & Co. Sitzmöbelwerke KG, D-59965 Hallenberg (DE)
(72) Erfinder: Heinzel, Eberhard, D-59965 Hallenberg (DE)
(74) Vertreter: Pürckhauer, Rolf, Dipl.-Ing.

(56) Entgegenhaltungen:
- US-A- 1 744 799
- US-A- 5 176 348

## Beschreibung

Die Erfindung betrifft Kreuzzargen aus Holz für Sitzmöbel und Tische.

Aus der US-A-5 176 348 ist eine Kreuzzarge bekannt, die aus Holzzargenteilen und L-förmigen Verbindungselementen gefertigt wird.

Aus der US-A 1 744 799 ist ein Holzstuhl bekannt, dessen Gestell aus einer mit einer Sitzplatte verschraubten Kreuzzarge, vier mit den beiden überplatteten Zargenteilen der Kreuzzarge verschraubten Stuhlbeinen sowie einer das Stuhlgestell versteifenden Kreuzstegkonstruktion besteht, deren beiden überplatteten Stege mit den unteren Abschnitten der Stuhlbeine verschraubt sind. Sowohl die beiden Zargenteile als auch die beiden Stege sind durch die Ausschnitte im Knotenpunkt mit einer der halben Zargen- bzw. Steghöhe entsprechenden Tiefe geschwächt. Wegen der unzureichenden Biege- und Torsionsfestigkeit der Kreuzzarge ist die Sitzplatte entsprechend stark ausgebildet und dadurch sehr hart, so daß es dem Stuhl an dem gewünschten Sitzkomfort mangelt. Zur Erhöhung der Festigkeit der Kreuzstegkonstruktion ist auf der Oberseite der beiden Stege im Knotenpunkt eine Verstärkungsplatte mit abgewinkelten Ansätzen befestigt, die die Stege umfassen.

Bei dem Herausschneiden der langen Zargenteile für die Kreuzzarge und der langen Stege für die Kreuzstegkonstruktion dieses bekannten Stuhles aus Brettern fällt wegen der Äste, Astlöcher usw. verhältnismäßig viel Verschnittmaterial an, so daß der Stuhl wegen der benötigten Holzmenge für die Kreuzzargen und die Kreuzstege für ein Massenprodukt zu teuer wird.

Der gleiche Nachteil gilt für auf dem Markt befindliche Sitzmöbel und Tische aus Holz mit Kreuzzargen, die aus einem langen Zargenteil und zwei kurzen Zargenteilen bestehen, die mit dem langen Zargenteil verdübelt sind.

Konstruktionsbedingt unterliegen die bekannten Kreuzzargen durch die auftretenden vertikalen und horizontalen Kräfte Biege- und Torsionsbeanspruchungen, die einen Bruch der Verbindungselemente aus Holz, vornehmlich von Dübeln bewirken können. Schließlich neigen Stuhl- und Tischgestelle mit Kreuzzargen, deren Zargenteile eine gewisse Länge überschreiten, zu einer Instabilität.

Aus der DE 37 08 991 C1 ist ein Zargenrahmen für Stapelstühle und -sessel mit einer vorderen und einer hinteren Zarge sowie zwei Seitenzargen aus Holz bekannt. Die vordere Zarge des Zargenrahmens ist mit ihren beiden Enden über Fingerzapfen mit den beiden vorderen Stuhlbeinen verbunden und in den Endbereichen mit den Seitenzargen verzapft. Die hintere Zarge besteht aus zwei in einer waagerechten Ebene V-förmig angeordneten Teilzargen, deren nach außen weisenden Enden mit den beiden hinteren Stuhlbeinen verzapft sind. Ferner sind die beiden Teilzargen in ihrem äußeren Abschnitt je mit einer Seitenzarge verzapft, und die spitz aufeinander zulaufenden inneren Enden der Teilzargen sind schräg mit einem die Seitenzargen verbindenden Mittelsteg in der Mitte desselben verzapft.

Diese aufwendige Zargenkonstruktion ist wegen der zu ihrer Herstellung benötigten Holzmenge verhältnismäßig teuer.

Der Erfindung liegt die Aufgabe zugrunde, eine konstruktiv einfache, stabile und preisgünstige Kreuzzarge aus Holz für Sitzmöbel und Tische zu entwickeln.

Diese Aufgabe ist erfindungsgemäß gelöst durch eine Kreuzzargenkonstruktion mit den Merkmalen des Patentanspruches 1.

Die Unteransprüche sind auf vorteilhafte Weiterbildungen der Zargenkonstruktion gerichtet.

Die erfindungsgemäße Kreuzzarge zeichnet sich durch folgende Vorteile aus:

Die Verwendung eines Verbindungselementes in Form von zwei Knotenblechen oder entsprechend ausgebildeten Kunststoffschalen, die die inneren Enden der vier Zargenteile formschlüssig aufnehmen und mit diesen verschraubt sind, ermöglicht die Herstellung einer Kreuzzarge aus vier kurzen Hölzern, die infolge des geringen Verschnitts billiger sind als das lange Zargenteil, das bei den bekannten Kreuzzargen eingesetzt wird. Durch die formschlüssige Aufnahme der inneren Enden der vier Zargenteile in dem vorzugsweise aus zwei Knotenblechen oder zwei Kunststoffschalen zusammengesetzten Verbindungselement ist die erforderliche Biege- und Torsionssteifigkeit des Stuhl- bzw. Tischgestells gewährleistet. Schließlich kann durch die Größe des Verbindungselementes die Länge der Aufnahmeöffnungen für die Zargenteile festgelegt und damit die Steifigkeit des Stuhl- bzw. Tischgestells im Hinblick auf eine gewünschte bestimmte Elastizität der Stuhl- bzw. Tischbeine beeinflußt werden.

Die Erfindung ist nachstehend anhand eines in der Zeichnung dargestellten Ausführungsbeispiels erläutert.
Es zeigt
- Fig. 1: eine Seitenansicht eines mit der neuen Kreuzzarge ausgerüsteten Stuhles,
- Fig. 2: eine Sprengdarstellung der Kreuzzarge,
- Fig. 3: eine Draufsicht der Kreuzzarge,
- Fig. 4: einen Schnitt nach Linie IV-IV der Fig. 3 und
- Fig. 5: eine Seitenansicht der Kreuzzarge.

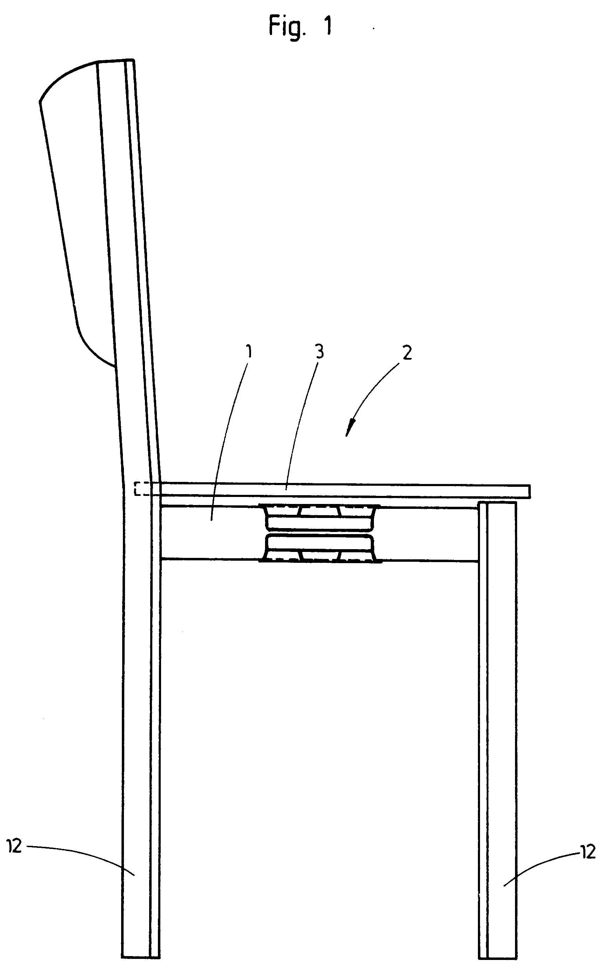

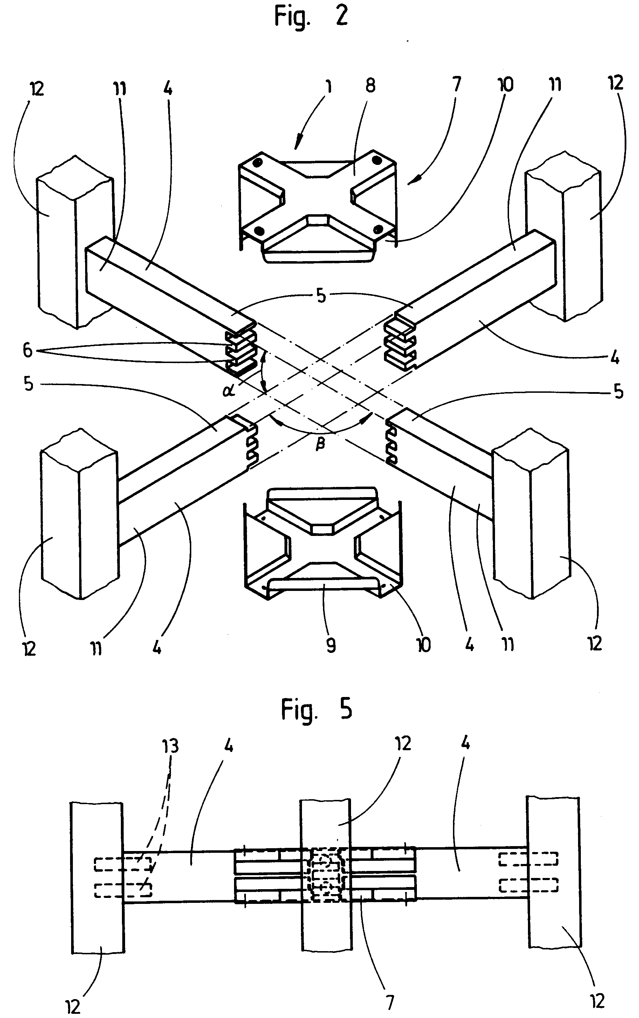

Die Kreuzzarge 1 nach den Fign. 2 bis 5 für einen Stuhl 2 mit einer flachen Sitzplatte 3 nach Fig. 1 weist vier in einer Ebene winklig zueinander angeordnete, als Flachhölzer ausgebildete Zargenteile 4 aus Massivholz, vorzugsweise Buchenholz, auf, deren innere Enden bzw. Stoßenden 5 durch Fingerzinken 6 zu einem Kreuz mit unterschiedlichen Teilungswinkeln α, β miteinander verbunden und verleimt sind.

Ein Verbindungselement 7 dient zur formschlüssigen Aufnahme der inneren Enden 5 der vier Zargenteile 4. Das Verbindungselement 7 ist aus einem Oberteil 8 und einem Unterteil 9 zusammengesetzt. Oberteil 8 und Unterteil 9 des Verbindungselementes 7 nehmen die inneren Enden 5 der Zargenteile 4 in entsprechenden Öffnungen 10 formschlüssig auf und sind mit den Zargenteilen 4 verschraubt.

Oberteil 8 und Unterteil 9 des Verbindungselementes 7 bestehen vorzugsweise aus Knotenblechen. Die beiden gegeneinander gesetzten Knotenbleche bewirken, daß an der Kreuzzarge angreifende Torsionskräfte gegeneinander aufgehoben werden.

Ferner bietet es sich an, Oberteil 8 und Unterteil 9 des Verbindungselementes 7 als Kunststoffschalen oder Gußteile zu fertigen.

An den freien Enden 11 der Zargenteile 4 der Kreuzzarge 1 sind die Stuhlbeine 12 mit Holzdübeln 13 befestigt.

Oberteil 8 und Unterteil 9 des Verbindungselementes 7 werden nach der Oberflächenbehandlung der Zarge 1 auf die inneren Enden 5 der Zargenteile 4 aufgesetzt und mit handelsüblichen Holzschrauben mit den Zargenteilen verschraubt.

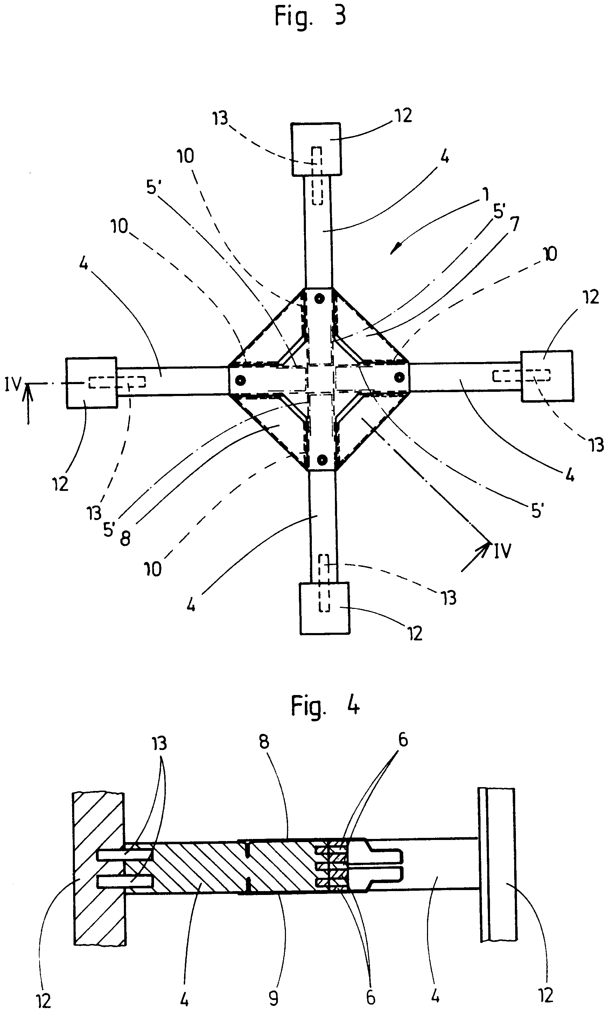

Bei einer abgeänderten Ausführungsform der Kreuzzarge sind die inneren Enden der vier Zargenteile 4 voneinander abgesetzt und mit mindestens zwei Schrauben mit dem Ober- 8 und Unterteil 9 des Verbindungselementes 7 verschraubt, wie dies in Fig. 3 durch die mit dem Bezugszeichen 5' gekennzeichneten, strichpunktierten Umrißlinien angedeutet ist.

## Patentansprüche

1. Kreuzzarge (1) aus Holz für Sitzmöbel und Tische, welche Kreuzzarge (1) vier Zargenteile (4) aufweist, wobei die inneren Enden (5) der Zargenteile (4) durch ein Verbindungselement (7) formschlüssig zu einem Kreuz mit gleichen oder unterschiedlichen Teilungswinkeln (α, β) miteinander verbunden sind, das Verbindungselement (7) aus einem Ober- (8) und einem Unterteil (9) zusammengesetzt ist und daß das Oberteil (8) und das Unterteil (9) die Zargenteile (4) in Öffnungen aufnehmen und mit diesen (4) verschraubt sind.

2. Kreuzzarge nach Anspruch 1, dadurch gekennzeichnet, daß die inneren Enden (5) der Zargenteile (4) durch Fingerzinken (6) miteinander verbunden und verleimt sind.

3. Kreuzzarge nach Anspruch 1, dadurch gekennzeichnet, daß die inneren Enden (5') der Zargenteile (4) mit Abstand in dem Verbindungselement (7) sitzen und mit diesem verschraubt sind.

4. Kreuzzarge nach einem der Ansprüche 1 bis 3, dadurch gekennzeichnet, daß das Oberteil (8) und das Unterteil (9) des Verbindungselementes (7) aus Knotenblechen bestehen.

5. Kreuzzarge nach einem der Ansprüche 1 bis 3, dadurch gekennzeichnet, daß das Oberteil (8) und das Unterteil (9) des Verbindungselementes (7) als Kunststoffschalen gefertigt sind.

## Claims

1. Wooden frame for chairs and tables, said frame (1) having four frame portions (4), the inner ends (5) of the frame portions (4) being interconnected by a connector member (7) in a positive-locking fashion to form a cross with identical or different angular pitch (α, β), the connector member (7) being composed of an upper (8) and a lower portion (9), and in that the upper portion (8) and the lower portion (9) receive the frame portions (4) in openings, and are screwed to the latter.

2. Frame according to claim 1, characterised in that the inner ends (5) of the frame portions (4) are connected and glued together by finger-type prongs (6).

3. Frame according to claim 1, characterised in that the inner ends (5') of the frame portions (4) sit spaced apart in the connector member (7) and are screwed to the latter.

4. Frame according to one of claims 1 to 3, characterised in that the upper portion (8) and the lower portion (9) of the connector member (7) consist of gusset plates.

5. Frame according to one of claims 1 to 3, characterised in that the upper portion (8) and the lower portion (9) of the connector member (7) are made in the form of plastic shells.

## Revendications

1. Bâti en croisillon (1) en bois pour des sièges et des tables, lequel bâti en croisillon (1) comporte quatre pièces de bâti (4), les extrémités intérieures (5) des pièces de bâti (4) étant assemblées par complémentarité de formes par un élément d'assemblage (7) de manière à former un croisillon ayant des angles (α, β) entre branches égaux ou différents, l'élément d'assemblage (7) étant composé d'une partie supérieure (8) et d'une partie inférieure (9), et la partie supérieure (8) et la partie inférieure (9) recevant les pièces de bâti (4) dans des ouvertures et étant vissées à ces pièces de bâti (4).

2. Bâti en croisillon selon la revendication 1, caractérisé par le fait que les extrémités intérieures (5) des pièces de bâti (4) sont assemblées au moyen de tenons digités (6) et sont collées.

3. Bâti en croisillon selon la revendication 1, caractérisé par le fait que les extrémités intérieures (5') des pièces de bâti (4) se trouvent à une certaine distance les unes des autres dans l'élément d'assemblage (7) et sont vissées à celui-ci.

4. Bâti en croisillon selon l'une des revendications 1 à 3, caractérisé par le fait que la partie supérieure (8) et la partie inférieure (9) de l'élément d'assemblage (7) sont des plaques goussets.

5. Bâti en croisillon selon l'une des revendications 1 à 3, caractérisé par le fait que la partie supérieure (8) et la partie inférieure (9) de l'élément d'assemblage (7) sont fabriquées sous forme de coquilles en matière plastique.
